# EUROPEAN PATENT APPLICATION

(11) **EP 4 808 278 A1**
(43) Date of publication of application: **16.09.2026**
(21) Application number: 24888885.1
(22) Date of filing: 22.07.2024
(51) Int. Cl.: H05B 3/28, H05B 3/03, G03B 17/55

(54) **HEATING MEMBER AND CAMERA MODULE COMPRISING SAME**

(30) Priority: 09.11.2023 KR 20230154906
(71) Applicant: LG Innotek Co., Ltd., Seoul 07796 (KR)
(72) Inventor: KIM, Do Hyeon, Seoul 07796 (KR)
(74) Representative: Plasseraud IP
(86) International application number: PCT/KR2024/010581
(87) International publication number: WO 2025/100689

(57) **Abstract**

This heating member comprises: a first substrate; a second substrate facing the first substrate; a heating layer disposed between the first and second substrates; a positive temperature coefficient (PTC) heater element disposed in the heating layer; and a negative temperature coefficient (NTC) heater element disposed in the heating layer, wherein the PTC element and the NTC element are connected in series.

## Description

### [Technical Field]

The present embodiment relates to a heating member and a camera module including the same.

### [Background Art]

Recently, micro-camera modules have been developed and are widely used in small electronic products such as smartphones, laptops, and game consoles.

With the popularization of automobiles, micro-cameras are widely used not only in small electronic products but also in vehicles. For example, the vehicles are equipped with dashcam cameras for vehicle protection or objective data on traffic accidents, rear-view cameras that allow the driver to monitor blind spots behind the vehicle via a screen to ensure safety when reversing, and surrounding detection cameras that monitor the vehicle's surroundings.

A camera includes a lens, a lens barrel that accommodates the lens, an image sensor that converts the image of a subject collected by the lens into an electrical signal, and a printed circuit board on which the image sensor is mounted. The housing forming an outer appearance of the camera is constructed with a structure that is sealed in the entire area thereof to prevent internal components from being contaminated by foreign substances containing moisture.

In the case of camera modules, the camera modules are disposed on the exterior of the vehicle and are heavily affected by the outside air, so frost, condensation, and ice frequently occur on the lenses during the winter. When frost, condensation, and ice occur on the lenses, there is a problem in that the performance of the camera module is significantly degraded.

### [Disclosure]

### [Technical Problem]

The present embodiment provides a heating member that can quickly remove frost or ice formed on the lens surface through a heating function and improve heating efficiency, and a camera module including the same.

### [Technical Solution]

According to the present embodiment, a heating member includes a first base material; a second base material facing the first base material; a heating layer disposed between the first base material and the second base material; a positive temperature coefficient heater (PTC) element disposed within the heating layer; and negative temperature coefficient heater (NTC) element disposed within the heating layer, in which the PTC element and the NTC element are connected in series.

The heating layer may include an electrode for providing power, the PTC element may be disposed on the surface of the electrode, and the NTC element may be disposed to wrap the surface of the PTC element.

The heating member may further include, based on the direction of current, a first area, a second area disposed behind the first area, and a third area disposed behind the second area, in which, in the first area, the PTC element is disposed between the first base material and the second base material, in the third area, the NTC element is disposed between the first base material and the second base material, and, in the second area, an electrode electrically connecting the PTC element and the NTC element is disposed between the first base material and the second base material.

An anti-oxidation film may be formed on the surface of the electrode within the second area.

The PTC element may include a first PTC element and a second PTC element, the electrode may include a first electrode connected to the first PTC element and a second electrode connected to the second PTC element, and the NTC element may have both ends connected to the first electrode and the second electrode.

According to the present embodiment, a camera module includes a first body; a lens module disposed within the first body and including a barrel and a lens disposed within the barrel; a substrate module disposed within the first body; and a heating member including one end connected to the surface of the lens and the other end connected to the substrate module to provide heat to the lens, in which the heating member include a first base material; a second base material facing the first base material; a heating layer disposed between the first base material and the second base material; a positive temperature coefficient heater (PTC) element disposed within the heating layer; and a negative temperature coefficient heater (NTC) element disposed within the heating layer, and the PTC element and the NTC element are connected in series.

### [Advantageous Effect]

This embodiment has the advantage of being able to quickly remove frost or ice formed on the lens surface through heat generated from the heating member.

In addition, by disposing a PTC element and an NTC element together within the heating member, the change in resistance due to operation is offset, thereby ensuring electrical stability during the operation of the heating member and improving energy efficiency.

### [Description of Drawings]

FIG. 1 is a perspective view illustrating a vehicle according to an embodiment of the present disclosure.
FIG. 2 is a cross-sectional view illustrating a camera module according to an embodiment of the present disclosure.
FIG. 3 is a conceptual diagram illustrating the power structure of a heating member according to an embodiment of the present disclosure.
FIG. 4 is a graph for explaining the process of canceling out resistance changes through a PTC heater and an NTC heater according to an embodiment of the present disclosure.
FIG. 5 is a plan view illustrating an area of a heating member according to an embodiment of the present disclosure.
FIG. 6 is a view taken along A-A' of FIG. 5.
FIG. 7 is a plan view illustrating an area of a heating member according to an embodiment of the present disclosure.
FIG. 8 is a conceptual diagram for explaining the disposition of PTC elements and NTC elements within a heating member according to an embodiment of the present disclosure.
FIG. 9 is a view taken along B-B' of FIG. 7.
FIG. 10 is a view taken along C-C' of FIG. 7.
FIG. 11 is a view taken along D-D' of FIG. 7.

### [Best Mode]

Hereinafter, preferred embodiments of the present disclosure will be described in detail with reference to the attached drawings.

However, the technical idea of the present disclosure is not limited to some of the embodiments described, but can be implemented in various different forms, and within the scope of the technical idea of the present disclosure, one or more of the components between the embodiments can be selectively combined or substituted and used.

In addition, terms (including technical and scientific terms) used in an embodiment of the present disclosure can be interpreted as meanings that can be generally understood by a person having ordinary knowledge in the technical field to which the present disclosure belongs, unless explicitly and specifically defined and described, and terms that are commonly used, such as terms defined in a dictionary, can be interpreted in consideration of the contextual meaning of the related technology.

In addition, terms used in the embodiment of the present disclosure are used to describe the embodiments and are not intended to limit the present disclosure.

In this specification, the singular may also include the plural unless specifically stated otherwise in the phrase, and when it is described as "at least one (or one or more) of A, B, C", it may include one or more of all combinations that can be combined with A, B, C.

In addition, in describing components of the present embodiment of the present disclosure, terms such as first, second, A, B, (a), (b), or the like may be used. These terms are only intended to distinguish the components from other components, and are not intended to limit the nature, order, or sequence of the components.

In addition, when a component is described as being 'connected', 'coupled', or 'accessed' to another component, it may include not only cases where the component is 'connected', 'coupled', or 'accessed' directly to the other component, but also cases where the component is 'connected', 'coupled', or 'accessed' by another component between the component and the other component.

In addition, when described as being formed or disposed "above" or "below" each component, "above" or "below" includes not only the case where the two components are in direct contact with each other, but also the case where one or more other components are formed or disposed between the two components. In addition, when expressed as "above" or "below", the meaning of the downward direction as well as the upward direction based on one component may be included.

Hereinafter, the 'optical axis direction' used is defined as the optical axis direction of the lens. Meanwhile, the 'optical axis direction' may correspond to the 'vertical direction', 'z-axis direction', or the like.

Hereinafter, the present disclosure will be described in more detail below with reference to the attached drawings.

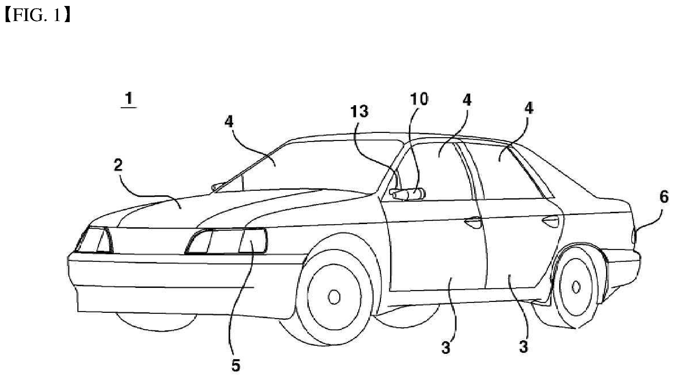

FIG. 1 is a perspective view illustrating a vehicle according to an embodiment of the present disclosure.

Referring to FIG. 1, a vehicle 1 according to an embodiment of the present disclosure may include a body 2, a door 3, glass 4, a headlamp 5, a taillamp 6, and a camera module 10.

The body 2 may be an exterior member of the vehicle 1. The body 2 may have various forms, such as a frame type or a monocoque type. One or more of the doors 3 may be coupled to the side of the body 2. In addition, the glass 4 may be coupled to the front and rear (part where the pillar is formed) of the upper portion of the body 2 and to the doors 3. The headlamp 5 may be mounted on the front of the lower portion of the body 2. The taillamp 6 may be mounted on the rear of the lower portion of the body 2.

A camera module 10 may be installed on the side of the body 2 or on the front door among one or more of the doors 3. The camera module 10 may be installed in front of the glass 4 coupled to the door 3. In other words, in the vehicle 1 of the present embodiment, the side mirror may be replaced by the camera module 10.

The camera module 10 may capture images of both rear sides of the vehicle. The images captured by the camera module 10 may be electrically connected to a display part (not illustrated) through an electronic control unit (ECU) or the like. Therefore, the images captured by the camera module 10 may be controlled by the electronic control unit (ECU) and played back on the display part.

An interior space for a driver may be formed inside the body 2. A display part may be installed inside the body 2. The display part may output images captured by the camera module 10. The display part may be installed on a dashboard (not illustrated) inside the body 2.

The installation form of the camera module 10 in the vehicle 1 described above is exemplary, and the camera module 10 may be used in one or more of the front camera, side camera, rear camera, and black box of the vehicle 1.

Hereinafter, a camera module according to the present embodiment will be described with reference to the drawings.

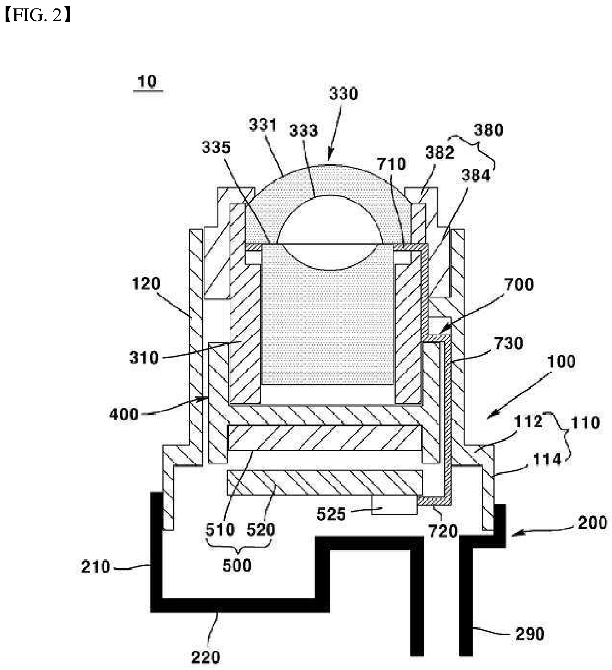

FIG. 2 is a cross-sectional view illustrating a camera module according to an embodiment of the present disclosure.

Referring to FIG. 2, the camera module 10 according to an embodiment of the present disclosure may include a first body 100, a second body 200, a lens module 300, a lens holder 400, a substrate module 500, and a heating member 700.

The first body 100 can form the outer appearance of the camera module 10. The first body 100 may be named as a front body, an upper housing, or a first housing. A space may be formed inside the first body 100 to dispose the lens module 300, the lens holder 400, and the substrate module 500.

The first body 100 may include a body part 110 and a protrusion part 120. The body part 110 and the protrusion part 120 may be formed integrally.

The body part 110 may be formed of a metal material. The body part 110 may be disposed on the second body 200. The body part 110 may be coupled to the second body 200. The lower end of the body part 110 may be fixed to the second body 200. The body part 110 may be coupled to the second body 200 by welding. Alternatively, the body part 110 may be coupled to the second body 200 by adhesive or fusion.

The body part 110 may be formed in a square shape with an open lower portion. At this time, the corners of the body part 110 may be formed rounded. The body part 110 may include an upper plate 112 and a first side plate 114 extending downward from the edge of the upper plate 112. The upper plate 112 may be formed in a square shape. The upper plate 112 may extend outward from the outer peripheral surface of the lower end of the protrusion part 120. The first side plate 114 may extend downward from the outer edge of the upper plate 112. A plurality of first side plates 114 may be provided. The first side plate 114 may include four side plates. The first side plate 114 may be formed in the shape of a square plate. For example, the first side plate 114 may include a first-1 side plate and a first-2 side plate, a first-3 side plate disposed opposite the first-1 side plate, and a first-4 side plate disposed opposite the first-2 side plate. The first side plate 114 may include first-1 to first-4 corners disposed respectively between the first-1 to first-4 side plates. Each of the first-1 to first-4 corners may include a round shape in at least a portion.

A space part separated from other areas may be formed on the inner side of the body part 110. The space part has an open lower portion and the upper portion thereof may be covered through the protrusion part 120 and the lower surface of the lens module 300.

The first body 100 may include a protrusion part 120. The protrusion part 120 may be formed of a metal material. The protrusion part 120 may have a circular cross-sectional shape. The protrusion part 120 may be disposed on the body part 110. The protrusion part 120 may extend upward from the upper surface of the body part 110. The protrusion part 120 may be formed integrally with the body part 110. As a modified example, the protrusion part 120 may be coupled to the body part 110. In this case, the protrusion part 120 may be fixed to the body part 110 with adhesive. The protrusion part 120 may accommodate the lens module 300 inside. A space to which the lens module 300 is coupled may be formed in the center of the protrusion part 120. The lens module 300 may be disposed in the space within the protrusion part 120.

The camera module 10 may include the second body 200. The second body 200 may be named as a rear body, a lower housing, a second housing, or a rear cover. The second body 200 may be formed in a square shape with an open upper portion. The second body 200 may be formed of a metal material. The second body 200 may be disposed below the first body 100. The second body 200 may be coupled with the first body 100. The second body 200 may form an internal space through coupling with the first body 100. The second body 200 may include a space part with an open upper surface.

The second body 200 may include the lower plate 220. The lower plate 220 may face the upper plate 114 of the first body 100 in the optical axis direction. The lower plate 220 may be spaced apart from the upper plate 114 of the first body 110 in the optical axis direction. The lower plate 220 may be parallel to the upper plate 114 of the first body 100. The lower plate 220 may be formed in a square shape. At this time, the corners of the lower plate 220 may include a rounded shape in at least a portion.

The second body 200 may include the second side plate 210. The second side plate 210 may extend from the lower plate 220. The second side plate 210 may extend upward from the outer edge of the lower plate 220. A shield member (not illustrated) may be disposed on the second side plate 210. The shield member may be in surface contact with the inner surface of the second side plate 210. The upper end of the second side plate 210 may be coupled to the first body 100. The inner surface of the second side plate 210 may be disposed to wrap around the outer surface of the first side plate 114. The inner surface of the second side plate 210 and the outer surface of the first side plate 114 may be coupled to each other by at least one of welding, adhesive, or fusion.

The second body 200 may include a connector withdrawal part 290. The connector withdrawal part 290 may have a shape that protrudes downward from the lower surface of the lower plate 220. The connector 490, which will be described below, may be disposed inside the connector withdrawal part 290. The connector withdrawal part 290 may be formed of a metal material. The connector withdrawal part 290 may have a hollow pipe shape inside.

The camera module 10 may include a lens module 300. The lens module 300 may be coupled to the first body 100. The lens module 300 may be coupled to a hole in the protrusion part 120. The lens module 300 may be disposed such that at least a portion is disposed inside the protrusion part 120 and the remaining portion protrudes upward from the first body 100.

The lens module 300 may include a barrel 310 and one or more lenses 330 accommodated within the barrel 310. The lenses 330 may be disposed facing the image sensor in the optical axis direction within the substrate module 500 to be described below. The lenses 330 may be aligned with the image sensor in the optical axis. A plurality of lenses 330 may be provided and disposed spaced apart from each other along the optical axis direction within the barrel 310. Among the plurality of lenses 330, the outermost lens may be exposed upward from the camera module 10.

The barrel 310 may include a space with upper and lower openings on the inside. The lenses 330 may be disposed in the space of the barrel 310. The barrel 310 may have a circular cross-sectional shape. The barrel 310 may be made of a metal material.

The lens module 300 may include a retainer 380. The retainer 380 may be coupled to the outer surface of the barrel 310. The retainer 380 may be screw-coupled to the barrel 310. Alternatively, the retainer 380 and the barrel 310 may be coupled to each other via epoxy. The retainer 380 may be attached to the upper end of the barrel 310. At least a portion of the retainer 380 may be disposed within the first body 100. The incident surface of the outermost lens of the lens may protrude upward above the upper surface of the retainer 380.

The coupling structure of the barrel 310 and the retainer 380 described above is exemplary, and the camera module 10 may be implemented as an integrated structure in which the barrel 310 and the retainer 380 are one body.

The retainer 380 may have a ring-shaped cross-section. The retainer 380 may be disposed so that at least a portion covers the edge of the outermost lens. The retainer 380 may be disposed to wrap around the edge of the outermost lens. The retainer 380 may be disposed to cover the edge of the outermost lens incident surface. The retainer 380 may be in contact with a portion of the incident surface of the outermost lens.

The retainer 380 may include a first area 382 in which the lower surface supports the incident surface of the outermost lens, and a second area 384 extending downward from the edge of the first area 382. The second area 384 may be disposed between the barrel 310 and the first body 100. The first area 382 and the second area 384 may be disposed perpendicularly to each other.

The camera module 10 may include a lens holder 400. The lens holder 400 may be disposed between the first body 100 and the barrel 310. The lens holder 400 may be disposed to wrap the outer surface of the barrel 310. The lens holder 400 may be formed in a cylindrical shape having a hollow that penetrates from the upper surface to the lower surface. Screw threads or screw grooves may be formed on the inner surface of the lens holder 400. Screw grooves or screw threads may be formed on the outer surface of the barrel 310 facing the inner surface of the lens holder 400. The barrel 310 may be screw-coupled into the lens holder 400.

A substrate coupling part may be formed on the lower surface of the lens holder 400 to which the first substrate 510 of the substrate module 500, which will be described below, is coupled. The substrate coupling part may have a groove shape that is concave upward from other areas.

The lens holder 400 may be omitted. In this case, the substrate module 500 may be coupled to the space within the first body 100.

The camera module 10 may include the substrate module 500. The substrate module 500 may be disposed in the space within the camera module 10. The substrate module 500 may be disposed between the first body 100 and the second body 200.

The above substrate module 500 may include a first substrate 510, a second substrate 520, and a connection substrate (not illustrated).

The first substrate 510 may be a printed circuit board (PCB). An image sensor may be disposed on the upper surface of the first substrate 510. The image sensor may be disposed on the first substrate 510 and disposed to face the lens within the lens module 300 in the optical axis direction. The first substrate 510 may be disposed within the substrate coupling part of the lens holder 400.

The second substrate 520 may be a printed circuit board (PCB). The second substrate 520 may be disposed spaced apart from the first substrate 510 in the optical axis direction. The second substrate 520 may be disposed below the first substrate 510. A connector (not illustrated) may be coupled to the lower surface of the second substrate 520. The upper end of the connector may be soldered to the lower surface of the second substrate 520.

A terminal 525 may be disposed on the lower surface of the second substrate 520. The terminal 525 may be electrically and physically connected to the lower end of the heating member 700 to be described below.

The second substrate 520 may be electrically connected to the first substrate 510. The second substrate 520 and the first substrate 510 may be electrically connected through the connection substrate. The connection substrate may be a flexible printed circuit board (FPCB). The upper and lower ends of the connection substrate may be coupled to the first substrate 510 and the second substrate 520, respectively, thereby electrically connecting the first substrate 510 and the second substrate 520.

The substrate module 500 may further include a shield can (not illustrated) disposed between the first substrate 510 and the second substrate 520. Through the shield can, the first substrate 510 and the second substrate 520 may be separated in the optical axis direction.

Hereinafter, a heating structure of a lens according to an embodiment of the present disclosure will be described.

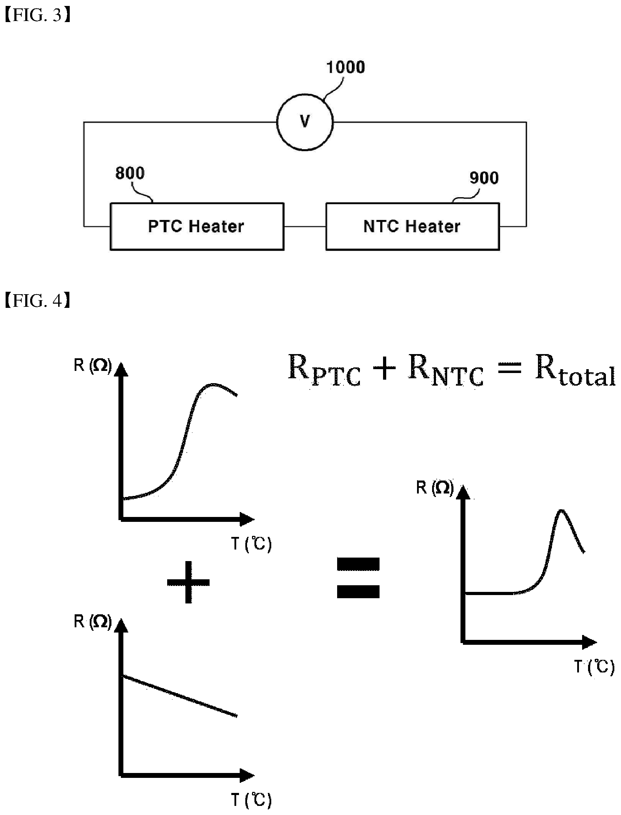

FIG. 3 is a conceptual diagram illustrating the power structure of a heating member according to an embodiment of the present disclosure, and FIG. 4 is a graph for explaining the process of canceling out resistance changes through a PTC heater and an NTC heater according to an embodiment of the present disclosure.

Referring to FIGS. 2 to 4, the camera module 10 may include a heating member 700. The heating member 700 may provide heat to the surface of the lens. The heating member 700 may provide heat to the surface of the outermost lens among the plurality of lenses 330. Accordingly, frost formed on the surface of the lens may be removed. One end of the heating member 700 may be connected to the surface of the lens, and the other end thereof may be connected to the substrate module 500.

In detail, the outermost lens disposed on the barrel 310 may include an incident surface 331 and into which light is incident, an exit surface 333 opposite to the incident surface 331 into which the incident light is emitted toward the image sensor, and a connection surface 335 connecting the incident surface 331 and the exit surface 333. The connection surface 335 may form the lower surface of the lens. The connection surface 335 may form the side surface of the lens. One end of the heating member 700 may be coupled to the connection surface 335.

The connection surface 335 may include a plurality of surfaces disposed at a step apart from each other in the optical axis direction. The plurality of surfaces may include a first surface and a second surface disposed inside the first surface. The plurality of surfaces may include a first side surface connecting the first surface and the second surface. The plurality of surfaces may include a second side surface disposed on the outer side of the first surface. The first surface may be disposed on the upper side of the second surface. One end of the heating member 700 may be coupled to the first surface. One end of the heating member 700 may be coupled to the second side surface.

The heating member 700 may be in the shape of a film. The heating member 700 may be a substrate on which a circuit pattern is formed. The heating member 700 may be a flexible printed circuit board (FPCB).

The heating member 700 may include an upper end portion 710, a lower end portion 720, and a connection part 730. The upper end portion 710 is disposed at the upper end of the heating member 700 and may be coupled to the surface of the lens. The upper end portion 710 has a ring-shaped cross-section and may be coupled to the connection surface 335. The upper end portion 710 may generate heat by providing power. The upper end portion 710 may have a circular shape corresponding to the shape of the lens or the barrel 310.

The lower end portion 720 is disposed at the lower end of the heating member 700 and can be coupled with the substrate module 500. The lower end portion 720 can be coupled to the lower surface of the second substrate 520 of the substrate module 500. The lower end portion 720 can be coupled to the terminal 525 disposed on the lower surface of the second substrate 520. Accordingly, power can be supplied from the substrate module 500 to the heating member 700, or a driving signal can be transmitted and received.

The connection part 730 can connect the upper end portion 710 and the lower end portion 720. The connection part 730 may include an area that is bent at least once. At least a portion of the connection part 730 may be disposed between the outer surface of the barrel 310 and the inner surface of the first body 100. A hole (not illustrated) may be formed in the barrel 310 so that the connection part 730 passes through it.

The heating member 700 according to an embodiment of the present disclosure may include a PTC heater (positive temperature coefficient heater) and an NTC heater (negative temperature coefficient heater). The heating member 700 may include a PTC element 800 for implementing the PTC heater and an NTC element 900 for implementing the NTC heater.

As illustrated in the upper left graph of FIG. 4, in the case of the PTC element 800, the resistance increases with the heating temperature. Therefore, when the heating member 700 is driven solely by the PTC element 800 at a low temperature, the PTC element 800 or other electronic components may be strained due to the occurrence of overcurrent caused by the initial low resistance, which has disadvantages in terms of electrical stability and energy efficiency.

As illustrated in the lower left graph of FIG. 4, since the resistance of the NTC element 900 decreases according to the heating temperature, as illustrated in the right graph of FIG. 4, the heating member 700 according to the embodiment of the present disclosure has the advantage of being able to form a temperature coefficient of resistance (TCR) that converges to virtually 0 in the operating temperature range of the heating member 700 because the increase in resistance due to the driving of the PTC element 800 within the circuit area of the heating member 700 is offset by the decrease in resistance due to the driving of the NTC element 900.

However, as illustrated in the upper left graph and the right graph of FIG. 4, the insulation effect resulting from the rapid exponential increase in resistance during the phase transition section of the PTC element 800 can be maintained even within the circuit of the heating member 700.

As illustrated in FIG. 3, the PTC element 800 and the NTC element 900 can be connected in series within the heating member 700. The PTC element 800 and the NTC element 900 can be disposed sequentially based on the flow of power provided from the power supply part 1000.

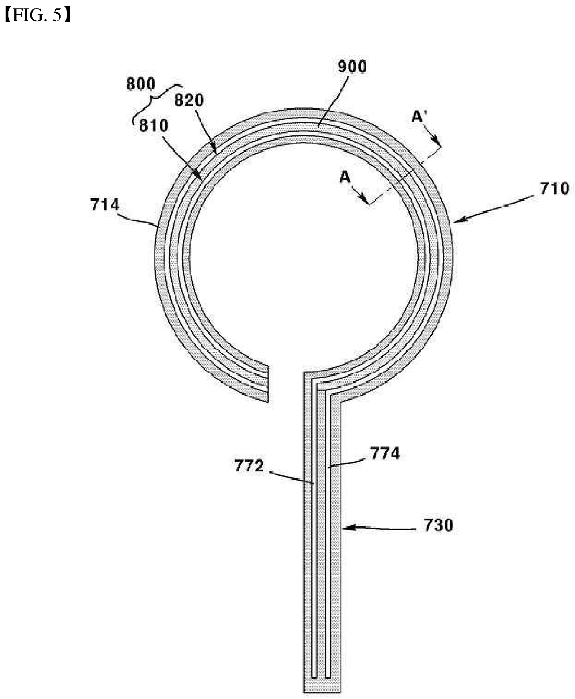

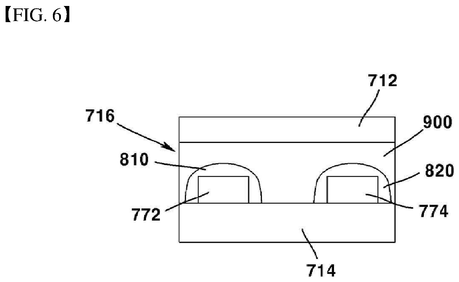

FIG. 5 is a plan view illustrating an area of the heating member according to an embodiment of the present disclosure, and FIG. 6 is a view taken along A-A' of FIG. 5.

FIG. 5 and FIG. 6 are intended to explain an example of the disposition structure of the PTC element 800 and the NTC element 900 within the heating member 700 according to an embodiment of the present disclosure.

Referring to FIGS. 5 and 6, the heating member 700 may include an upper end portion 710 and a connection part 730. The heating member 700 may include a plurality of electrodes 772, 774, and the plurality of electrodes 772, 774 may be disposed along the upper end portion 710 and the connection part 730. In the upper end portion 710, the plurality of electrodes 772, 774 may be disposed spaced apart in a radial direction. In the connection part 730, the plurality of electrodes 772, 774 may be connected to the plurality of electrodes 772, 774 within the upper end portion 710, respectively.

The plurality of electrodes 772, 774 may include a first electrode 772 and a second electrode 774, and the polarity of the first electrode 772 and the polarity of the second electrode 774 may be opposite to each other.

The PTC element 800 and the NTC element 900 may be disposed on the upper end portion 710.

In detail, as illustrated in FIG. 6, the heating member 700 may include a first base material 712, a second base material 714, and a heating layer 716.

The first base material 712 and the second base material 714 are each formed in a film shape and can form a space in which the heating layer 716 is disposed between them. The first base material 712 can be disposed relatively closer to the surface of the lens than the second base material 714. Accordingly, the first base material 712 can be named as the upper substrate and the second base material 714 can be named as the lower substrate.

The first base material 712 and the second base material 714 may have different materials. For example, the material of the first base material 712 may be polyimide. The material of the second base material 714 may be PET.

With respect to the optical axis direction, the thickness of the first base material 712 may be smaller than the thickness of the second base material 714. Accordingly, the thickness of the first base material 712, which is disposed relatively close to the surface of the lens, is formed thinly so that heat generated from the heating layer 716 can be efficiently transferred to the surface of the lens. Additionally, heat loss can be prevented through the second base material 714.

The thermal conductivity of the first base material 712 may be greater than the thermal conductivity of the second base material 714. Accordingly, heat can be concentrated on the lens through the first base material 712.

The heating layer 716 may be disposed between the first base material 712 and the second base material 714. The heating layer 716 may include electrodes 772, 774, a PTC element 800, and an NTC element 900. The heating layer 716 may include a polymer that wraps the PTC element 800 and the NTC element 900.

The electrodes 772, 774 may be disposed on the surface of the heating layer 716. The electrodes 772, 774 may be disposed on the surface of the polymer. The electrodes 772, 774 may be disposed on the surface of the heating layer 716 facing the second base material 714. The electrodes 772, 774 may be disposed on the surface of the second base material 714.

The electrodes 772, 774 include a first electrode 772 and a second electrode 774 having different polarities, and can provide power to the PTC element 800 and the NTC element 900.

The PTC element 800 can be disposed on the surface of the electrodes 772, 774. The PTC element 800 can be disposed to wrap the surface of the electrodes 772, 774. The PTC element 800 is disposed within the polymer, and can generate heat by causing a change in resistance due to the power provided from the electrodes 772, 774.

The NTC element 900 can be disposed between the first base material 712 and the second base material 714. The NTC element 900 can be disposed on the surface of the PTC element 800. Based on the flow of power provided from the electrodes 772, 774, the NTC element 900 may be disposed behind the PTC element 800. A change in resistance may occur due to the power provided through the electrodes 772, 774 and the PTC element 800, thereby generating heat.

Meanwhile, in the present embodiment, the PTC element 800 is disposed on the surface of the electrodes 772, 774 and the NTC element 900 is disposed on the surface of the PTC element 800 as an example; however, this is not limited thereto, and the NTC element 900 may be disposed on the surface of the electrodes 772, 774 and the PTC element 800 may be disposed on the surface of the NTC element 900.

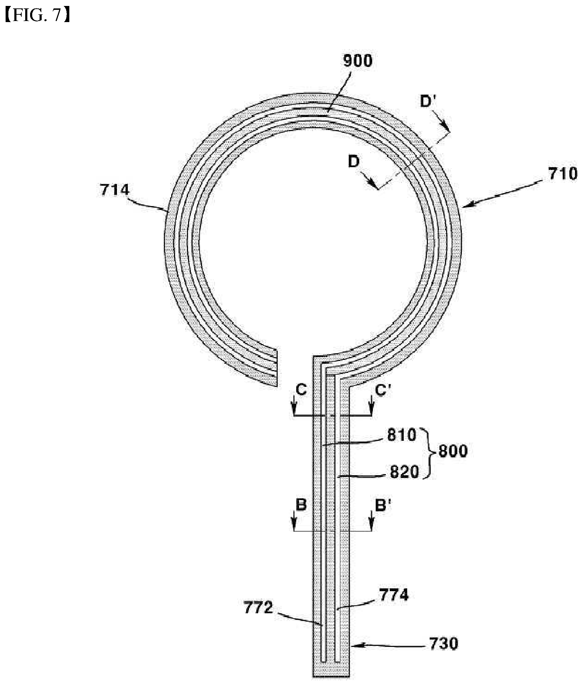

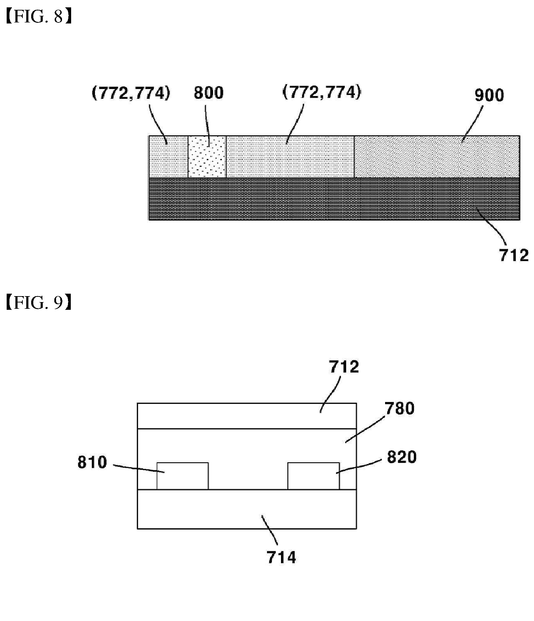

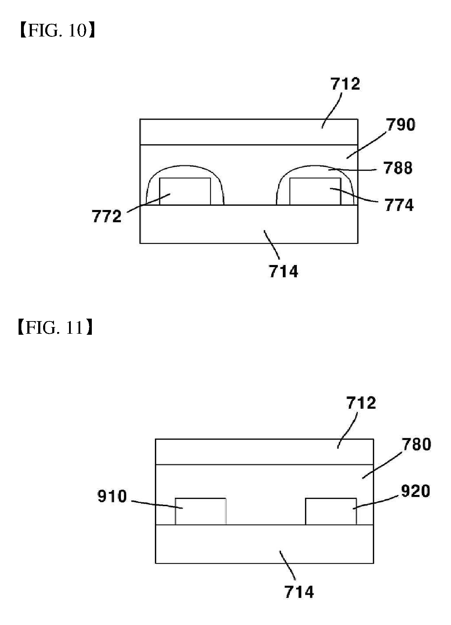

FIG. 7 is a plan view illustrating an area of a heating member according to an embodiment of the present disclosure, FIG. 8 is a conceptual diagram for explaining the disposition of PTC elements and NTC elements within a heating member according to an embodiment of the present disclosure, FIG. 9 is a view taken along B-B' of FIG. 7, FIG. 10 is a view taken along C-C' of FIG. 7, and FIG. 11 is a view taken along D-D' of FIG. 7.

FIG. 7 to FIG. 11 are intended to explain another example of the disposition structure of a PTC element 800 and an NTC element 900 within a heating member 700 according to an embodiment of the present disclosure.

Referring to FIG. 7 to FIG. 11, the heating member 700 may include an upper end portion 710 and a connection part 730. The heating member 700 may include a plurality of electrodes 772, 774, and the plurality of electrodes 772, 774 may be disposed along the upper end portion 710 and the connection part 730. In the upper end portion 710, the plurality of electrodes 772, 774 may be disposed spaced apart in the radial direction. In the connection part 730, the plurality of electrodes 772, 774 may be connected to each of the plurality of electrodes 772, 774 in the upper end portion 710.

The plurality of electrodes 772, 774 may include a first electrode 772 and a second electrode 774, and the polarity of the first electrode 772 and the polarity of the second electrode 774 may be opposite to each other.

In the heating member 700, the PTC element 800 and the NTC element 900 may be disposed sequentially along the current direction. For example, the PTC element 800 may be disposed within the connection part 730, and the NTC element 900 may be disposed within the upper end portion 710.

For another example, the PTC element 800 and the NTC element 900 may be disposed within the upper end portion 710 and may be mutually partitioned based on the electrodes 772, 774.

More specifically, the heating member 700 may include a first area in which the PTC element 800 is disposed between the first base material 712 and the second base material 714, a second area in which the electrodes 772, 774 are disposed between the first base material 712 and the second base material 714, and a third area in which the NTC element 900 is disposed between the first base material 712 and the second base material 714. The second area may be disposed between the first area and the third area, so that the PTC element 800 and the NTC element 900 are electrically connected through the electrodes 772, 774 but may be mutually divided. The first area, the second area, and the third area may be disposed in the direction of current.

The first area may be disposed within the connection part 730. As illustrated in FIG. 9, in the first area, the heating member 700 may have a heating layer 780 formed through the PTC element 800 between the first base material 712 and the second base material 714, and the heating layer 780 may include a polymer that wraps the PTC element 800. The PTC element 800 may be disposed on the surface of the second base material 714. Both ends of the PTC element 800 may be connected to the electrodes 772, 774, respectively. The electrodes 772, 774 may be divided into a plurality of areas based on the PTC element 800. The PTC element 800 may include a first PTC element 810 connected to the first electrode 772 and a second PTC element 820 connected to the second electrode 774. By providing power from the electrodes 772, 774, the heating layer 780 can generate heat due to a change in the resistance of the PTC element 800.

The second area may be disposed behind the first area. The second area may be disposed in the connection area between the upper end portion 710 and the connection part 730. As illustrated in FIG. 10, the electrode 772, 774 of the heating member 700 may be disposed between the first base material 712 and the second base material 714 in the second area. In this case, the area disposed between the first base material 712 and the second base material 714 in the second area may be named the electrode layer 790. In the area of the electrode layer 790 excluding the disposing area of the electrode 772, 774, an adhesive material for coupling the first base material 712 and the second base material 714 may be disposed, or air may be contained. When air is contained within the electrode layer 790, an anti-oxidation film 778 for preventing oxidation may be formed on the surface of the electrodes 772, 774.

The third area may be disposed behind the second area. The third area may be disposed on the upper end portion 710. As illustrated in FIG. 11, in the third area, a heating layer 780 may be formed through an NTC element 900 between the first base material 712 and the second base material 714 of the heating member 700, and the heating layer 780 may include a polymer that wraps the NTC element 900. The NTC element 900 may be disposed on the surface of the second base material 714. One end of the NTC element 900 may be connected to the electrodes 772, 774. The NTC element 900 may include a first NTC element 910 connected to the first electrode 772 and a second NTC element 920 connected to the second electrode 774. One end of the first NTC element 910 and the second NTC element 920 are each connected to the electrodes 772, 774, and the other end of the first NTC element 910 and the other end of the second NTC element 920 may be interconnected at the end of the upper end portion 710. Accordingly, power supplied through the first electrode 772 may be supplied in the order of the first PTC element 810, the first electrode 772, the NTC element 900, the second electrode 774, and the second PTC element 820. In this case, the third area can generate heat due to the change in resistance of the NTC element 900.

Meanwhile, although the example was described where a PTC element is disposed in the first area and an NTC element is disposed in the third area, this is not limited thereto, and it is of course possible to dispose an NTC element in the first area and a PTC element in the third area.

According to the above structure, by placing the PTC element and the NTC element together within the heating member so that the change in resistance due to operation is offset, there is an advantage of being able to improve energy efficiency along with securing electrical stability due to the operation of the heating member.

In the foregoing, although all components constituting an embodiment of the present disclosure have been described as being combined or operating in combination, the present disclosure is not necessarily limited to such embodiments. In other words, within the scope of the object of the present disclosure, all components may be selectively combined in one or more ways to operate. Furthermore, terms such as "include," "constitute," or "have" described above, unless specifically stated otherwise, mean that the relevant component may be inherent; thus, they should be interpreted as allowing for the inclusion of additional components rather than excluding other components. All terms, including technical or scientific terms, have the same meaning as generally understood by those skilled in the art to which the present disclosure pertains, unless otherwise defined. Terms commonly used, such as those defined in advance, should be interpreted in accordance with their meaning in the context of the relevant technology and should not be interpreted in an ideal or overly formal sense unless explicitly defined in the present disclosure.

The foregoing description is merely an illustrative explanation of the technical concept of the present disclosure, and those skilled in the art to which the present disclosure pertains will be able to make various modifications and variations within the scope of the essential characteristics of the present disclosure. Accordingly, the embodiments disclosed in the present disclosure are intended to explain, not limit, the technical concept of the present disclosure, and the scope of the technical concept of the present disclosure is not limited by such embodiments. The scope of protection of the present disclosure shall be interpreted by the claims below, and all technical concepts within an equivalent scope shall be interpreted as being included within the scope of rights of the present disclosure.

## Claims

1. A heating member comprising:
a first base material;
a second base material facing the first base material;
a heating layer disposed between the first base material and the second base material;
a positive temperature coefficient heater (PTC) element disposed within the heating layer; and
a negative temperature coefficient heater (NTC) element disposed within the heating layer,
wherein the PTC element and the NTC element are connected in series.

2. The heating member of claim 1,
wherein the heating layer includes an electrode for providing power,
wherein the PTC element is disposed on the surface of the electrode, and
wherein the NTC element is disposed to surround the PTC element.

3. The heating member of claim 1,
wherein the heating layer includes:
a first area, a second area disposed adjacent to the first area, and a third area disposed adjacent to the second area along a current direction,
wherein the PTC element is disposed between the first base material and the second base material in the first area,
wherein the NTC element is disposed between the first base material and the second base material in the third area, and
wherein an electrode electrically connecting the PTC element and the NTC element is disposed between the first base material and the second base material in the second area.

4. The heating member of claim 3,
wherein an anti-oxidation film is formed on the surface of the electrode within the second area.

5. The heating member of claim 3,
wherein the PTC element includes a first PTC element and a second PTC element,
wherein the electrode includes a first electrode connected to the first PTC element and a second electrode connected to the second PTC element, and
wherein the NTC element has both ends connected to the first electrode and the second electrode.

6. A camera module comprising:
a first body;
a lens module disposed within the first body and including a barrel and a lens disposed within the barrel;
a substrate module disposed within the first body; and
a heating member including one end connected to the surface of the lens and the other end connected to the substrate module to provide heat to the lens,
wherein the heating member includes:
a first base material;
a second base material facing the first base material;
a heating layer disposed between the first base material and the second base material;
a positive temperature coefficient heater (PTC) element disposed within the heating layer; and
a negative temperature coefficient heater (NTC) element disposed within the heating layer, and
wherein the PTC element and the NTC element are connected in series.

7. The camera module of claim 6,
wherein the heating layer includes an electrode for providing power,
wherein the PTC element is disposed on the surface of the electrode, and
wherein the NTC element is disposed to surround the PTC element.

8. The camera module of claim 6,
wherein the heating member includes:
a first area, a second area disposed adjacent to the first area, and a third area disposed adjacent to the second area along a current direction,
wherein the PTC element is disposed between the first base material and the second base material in the first area,
wherein the NTC element is disposed between the first base material and the second base material in the third area, and
wherein an electrode electrically connecting the PTC element and the NTC element is disposed between the first base material and the second base material in the second area.

9. The camera module of claim 8,
wherein the heating member includes:
an upper end portion coupled to the surface of the lens,
a lower end portion coupled to the substrate module, and
a connection part connecting the upper end portion and the lower end portion,
wherein the first area is disposed in the connection part and,
wherein the third area is disposed in the upper end portion.

10. The camera module of claim 8,
wherein an anti-oxidation film is formed on the surface of the electrode within the second area.
